# FASCICULE DE BREVET EUROPEEN

(11) **EP 2 727 784 B1**
(45) Date de publication et mention de la délivrance du brevet: **20.05.2015**
(21) Numéro de dépôt: 13189346.3
(22) Date de dépôt: 18.10.2013
(51) Int. Cl.: B60T 8/17, B60T 13/74, B64C 25/42, B64C 25/44

(54) **Procédé de freinage électromécanique pour réduire les vibrations**
Elektromechanisches Bremsverfahren zur Reduzierung von Schwingungen
An electromechanical braking method for reducing vibration

(30) Priorité: 31.10.2012 FR 1260402
(43) Date de publication de la demande: 07.05.2014
(73) Titulaire: Messier-Bugatti-Dowty, 78140 Vélizy-Villacoublay (FR)
(72) Inventeur: Laur, Marion, 78140 Velizy-Villacoublay (FR); Lepage, Thomas, 78140 Velizy-Villacoublay (FR); Diebold, Jean-Frédéric, 78140 Velizy-Villacoublay (FR); Chico, Philippe, 78140 Velizy-Villacoublay (FR)
(74) Mandataire: Parzy, Benjamin Alain

(56) Documents cités:
- WO-A2-01/15948
- GB-A- 2 463 752
- US-A1- 2009 276 133

## Description

L'invention concerne un procédé de freinage électromécanique d'aéronef.

### ARRIERE PLAN DE L'INVENTION

Un frein électromécanique d'aéronef comporte en général au moins un actionneur électromécanique comprenant un moteur électrique et un poussoir actionné par le moteur pour appliquer sélectivement un effort de presse sur des éléments de frictions du frein, par exemple une pile de disques de carbone.

Au cours d'un freinage de l'aéronef, les frottements au niveau des interfaces des disques de carbone induisent des vibrations dont le niveau peut être très important. Ces vibrations, d'une part, sont ressenties par les pilotes comme un défaut de fiabilité, et d'autre part, créent de fortes contraintes mécaniques sur les atterrisseurs et sur l'ensemble des équipements situés sur les atterrisseurs, obligeant les fournisseurs de ces équipements à mettre en oeuvre d'importants efforts de conception pour que les équipements conservent une fiabilité satisfaisante malgré les vibrations.

Les fournisseurs de freins cherchent donc à réduire au maximum ces vibrations et à rendre leur niveau compatible avec des exigences définies par les avionneurs. Il a ainsi été envisagé d'atténuer des modes de vibration du frein en rompant la symétrie de la structure du frein, par exemple en ajoutant des ouvertures ou des évidements répartis de façon inhomogène sur la structure du frein. Cette solution nécessite d'ajouter des renforts sur la structure pour compenser les ouvertures ou évidements et rééquilibrer le frein, ce qui tend à complexifier la structure du frein et à augmenter son poids et son coût. La publication WO 01/15948 A2 divulgue un procédé de freinage électromécanique.

### OBJET DE L'INVENTION

L'invention a pour objet de réduire les vibrations générées par un frein électromécanique, sans complexifier sa structure et sans augmenter son poids ni son coût.

### RESUME DE L'INVENTION

En vue de la réalisation de ce but, on propose un procédé de freinage électromécanique d'aéronef comportant au moins un frein électromécanique équipant au moins une roue freinée de l'aéronef, le frein comprenant des organes de friction et une pluralité d'actionneurs électromécaniques, chaque actionneur comportant un poussoir apte à être déplacé au moyen d'un moteur électrique pour appliquer sélectivement un effort de presse sur les organes de friction. Selon l'invention, pour un freinage donné, on répartit de façon hétérogène entre les actionneurs du frein un effort total à appliquer sur les organes de friction du frein, de sorte qu'au moins deux actionneurs appliquent des efforts respectifs distincts, la répartition entre les actionneurs étant modifiée après un nombre de freinages prédéfini ou aléatoire.

En répartissant de façon hétérogène entre les actionneurs l'effort total, on casse la symétrie des efforts appliqués sur les organes de friction, ce qui permet de découpler des modes de vibration, et donc de réduire le niveau des vibrations générées lors du freinage.

### BREVE DESCRIPTION DES DESSINS

L'invention sera mieux comprise à la lumière de la description qui suit en référence aux figures des dessins annexés parmi lesquelles :
- la figure 1 représente une roue munie d'un frein électromécanique, et des moyens de commande adaptés à commander des actionneurs du frein de manière à mettre en oeuvre le procédé de l'invention ;
- la figure 2a représente un couple de freinage mesuré pendant un premier freinage selon l'art antérieur au cours duquel des actionneurs d'un frein sont commandés de manière homogène ;
- la figure 2b représente un couple de freinage mesuré pendant un deuxième freinage au cours duquel des actionneurs d'un frein sont commandés selon le procédé de freinage de l'invention ;
- la figure 3 représente des niveaux de vibrations mesurés pendant le premier et le deuxième freinage.

### DESCRIPTION DETAILLEE DE L'INVENTION

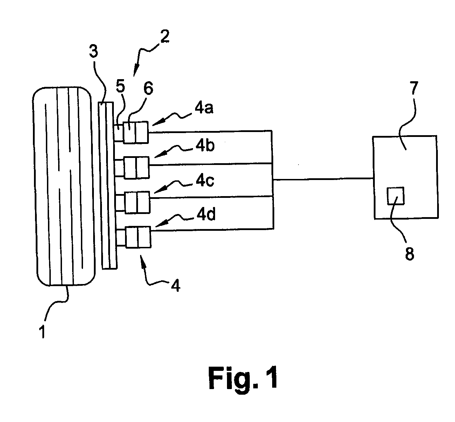

Le procédé de freinage électromécanique de l'invention est mis en oeuvre sur un aéronef comportant un certain nombre de roues 1 dites « roues freinées » semblables à celle représentée à la figure 1, chaque roue freinée 1 étant freinée au moyen d'un frein électromécanique 2. Chaque frein 2 de l'aéronef comprend des organes de frictions 3, ici une pile de disques, et quatre actionneurs électromécaniques 4, en l'occurrence des actionneurs 4a, 4b, 4c, 4d, chaque actionneur 4 comportant un poussoir 5 apte à être déplacé au moyen d'un moteur électrique 6 pour appliquer sélectivement un effort de presse sur la pile de disques 3.

Les actionneurs 4 sont commandés par des moyens de commande 7 qui reçoivent une consigne de freinage émise suite à l'actionnement par un pilote de l'aéronef de pédales de frein ou d'une manette dite autobrake commandant un freinage automatique, la consigne pouvant être avantageusement corrigée par une application d'une fonction de protection d'anti-glissement.

Habituellement, lorsqu'une consigne de freinage est émise, la commande est réglée de façon à ce que l'effort de presse total à appliquer sur les organes de friction d'un frein est réparti de façon homogène entre les actionneurs du frein. Par exemple, pour un frein muni de quatre actionneurs, comme c'est le cas ici, cela signifie que la commande de freinage est définie pour que chaque actionneur applique un effort de presse égal à 25% de l'effort de presse total commandé.

Le procédé de freinage de l'invention consiste au contraire à adapter les moyens de commande 7 de manière à ce qu'ils commandent les actionneurs 4 en répartissant l'effort de presse total de façon hétérogène entre les actionneurs 4 du frein 2. Avec cette logique de commande, au cours d'un freinage, au moins deux actionneurs 4 appliquent des efforts de presse respectifs distincts. Cette logique de commande du frein garantit une usure homogène du frein (actionneurs, puits de chaleur, etc.).

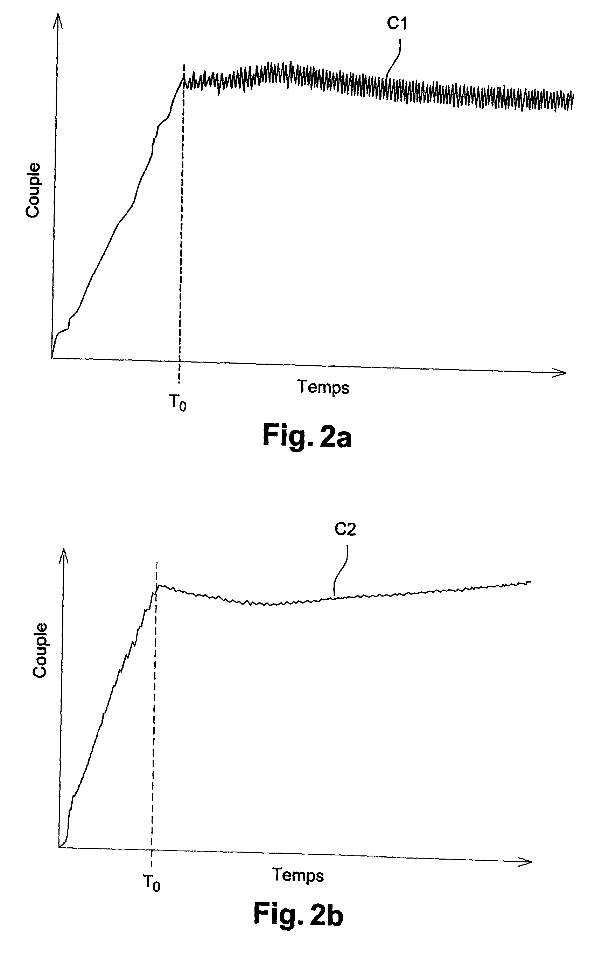

La figure 2a représente un couple de freinage C1 en fonction du temps, mesuré pendant un premier freinage, le couple C1 étant délivré au frein 2 par l'ensemble des actionneurs 4 du frein 2. Au cours de ce premier freinage, la commande de freinage est réglée de façon à ce que l'effort de presse total soit réparti de façon homogène entre les actionneurs 4 du frein 2. On constate que des vibrations importantes apparaissent au temps t=T0, au moment où le couple C1 atteint une valeur cible correspondant à l'effort de presse total commandé.

La figure 2b représente un couple de freinage C2 en fonction du temps, mesuré pendant un deuxième freinage, le couple C2 étant délivré au frein 2 par l'ensemble des actionneurs 4 du frein 2. Au cours de ce deuxième freinage, la commande de freinage est réglée de façon à ce que l'effort de presse total soit réparti de façon hétérogène entre les actionneurs 4 selon le procédé de freinage de l'invention. Ici, la commande de freinage transmise aux actionneurs 4 est réglée pour que deux actionneurs apportent à l'effort de presse total une contribution de 32,5%, c'est à dire qu'ils appliquent 32,5% de l'effort total, un actionneur apporte une contribution de 30%, et le quatrième actionneur une contribution de 5%. On note que les vibrations apparaissant au temps t=T0, au moment où le couple C2 atteint la valeur cible, sont très faibles.

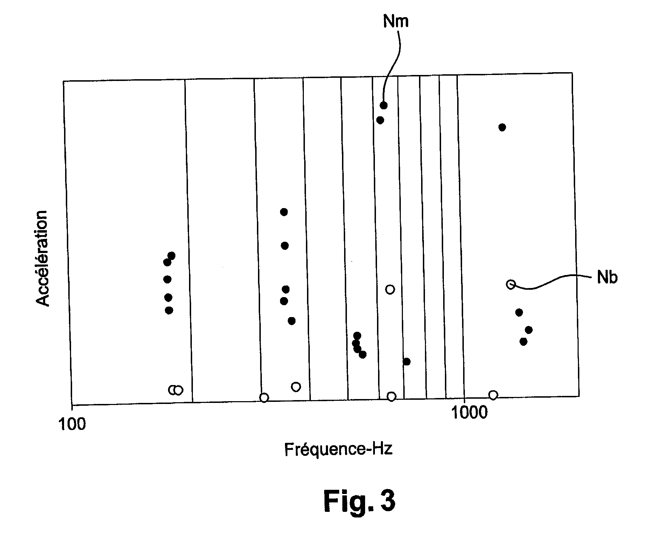

Enfin, la figure 3 représente des niveaux d'amplitude de vibrations exprimée en accélération en fonction de fréquences de vibration, relevés au cours du premier freinage pour lequel la commande de freinage est réglée pour que l'effort de presse total soit réparti de façon homogène (niveaux représentés par des points noirs Nn) et au cours du deuxième freinage pour lequel la commande de freinage est réglée pour que l'effort de presse total soit réparti de façon hétérogène (niveaux représentés par des points blancs Nb), selon la répartition décrite plus tôt.

On note à nouveau que les niveaux de vibrations sont moins élevés au cours du deuxième freinage pour lequel la commande de freinage est telle que l'effort de presse total est réparti de façon hétérogène entre les actionneurs 4.

Les courbes et nuages de points des figures 2a, 2b et 3 permettent de constater clairement qu'une répartition hétérogène de l'effort de presse entre les actionneurs d'un même frein permet de réduire nettement les niveaux de vibrations.

Pour éviter une usure ou un endommagement prématuré d'un actionneur 4 appliquant à chaque freinage un effort de presse supérieur à ceux appliqués par les autres actionneurs, et pour éviter une usure inhomogènes de faces de frottements des disques 3 du frein 2, selon l'invention, la logique de contrôle du frein prévoit de redistribuer la répartition hétérogène de la commande de freinage entre les actionneurs 4 aléatoirement ou de façon prédéfinie après un certain nombre de freinages. La répartition est modifiée avant un freinage, et non pendant le freinage.

Selon un mode préféré de mise en oeuvre, des contributions prédéfinies sont ainsi mémorisées dans les moyens de commande. Au cours d'un freinage donné, appelé ici Fr1, par exemple un premier freinage succédant à un chargement des contributions prédéfinies dans un module de mémoire 8 des moyens de commande 7, ces contributions sont réparties entre les différents actionneurs 4. On appelle par la suite Fr2, Fr3, Fr4, Fr5, ..., les freinages ultérieurs.

Ainsi, en utilisant des contributions égales à 10%, 15%, 35% et 40%, la répartition pour le freinage Fr1 consiste à attribuer la contribution de 10% à l'actionneur 4a, de 15% à l'actionneur 4b, de 35% à l'actionneur 4c, et de 40% à l'actionneur 4d.

Selon un premier mode de mise en oeuvre, les contributions prédéfinies sont permutées à chaque modification de répartition entre les actionneurs 4 de sorte que chaque actionneur 4 apporte successivement chacune des contributions à l'effort total. Ainsi, pour le freinage Fr2, la contribution des actionneurs 4a, 4b, 4c, 4d est respectivement de 15%, 35%, 40%, 10%, pour le freinage Fr3 de 35%, 40%, 10%, 15%, pour le freinage Fr4 de 40%, 10%, 15%, 35%. Pour le freinage Fr5, la répartition des contributions entre les actionneurs 4 est identique à celle du freinage Fr1.

Selon un deuxième mode de mise en oeuvre, les contributions prédéfinies sont attribuées aléatoirement à chaque actionneur 4. Il est ainsi possible qu'un même actionneur 4 apporte une contribution identique avant et après une modification, mais l'usure des actionneurs 4 et des disques 3 est considérée comme homogène sur une période suffisamment longue.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait illustré l'invention en munissant le frein de quatre actionneurs, l'invention s'applique bien sûr à des freins dont le nombre d'actionneurs est différent (supérieur à un).

Les contributions au freinage de chaque actionneur ne sont fournies que pour illustrer l'invention, et peuvent bien sûr être différentes.

## Revendications

1. Procédé de freinage électromécanique d'aéronef comportant au moins un frein électromécanique (2) équipant au moins une roue freinée (1) de l'aéronef, le frein (2) comprenant des organes de friction (3) et une pluralité d'actionneurs électromécaniques (4), chaque actionneur (4) comportant un poussoir (5) apte à être déplacé au moyen d'un moteur électrique (6) pour appliquer sélectivement un effort de presse sur les organes de friction (3), le procédé étant tel que, pour un freinage donné, on répartit de façon hétérogène entre les actionneurs (4) du frein un effort total à appliquer sur les organes de friction (3) du frein, de sorte qu'au moins deux actionneurs (4) appliquent des efforts respectifs distincts, **caractérisé en ce que** la répartition entre les actionneurs (4) est modifiée après un nombre de freinages prédéfini ou aléatoire.

2. Procédé de freinage selon la revendication 1 dans lequel, pour un freinage donné, chaque actionneur (4) apporte à l'effort total une contribution prédéfinie, et dans lequel, à chaque modification de répartition, les contributions prédéfinies sont permutées entre les actionneurs de sorte que chaque actionneur apporte successivement chacune des contributions prédéfinies à l'effort total.

3. Procédé de freinage selon la revendication 1 dans lequel, pour un freinage donné, chaque actionneur (4) apporte à l'effort total une contribution prédéfinie, et dans lequel, à chaque modification de répartition, les contributions prédéfinies sont attribuées aléatoirement à chaque actionneur.

## Patentansprüche

1. Elektromechanisches Bremsverfahren für ein Flugzeug, umfassend mindestens eine elektromechanische Bremse (2), mit der mindestens ein gebremstes Rad (1) des Flugzeugs ausgerüstet ist, wobei die Bremse (2) Reibelemente (3) und eine Vielzahl elektromechanischer Aktoren (4) umfasst, wobei jeder Aktor (4) einen Stößel (5) umfasst, der dazu geeignet ist, mit Hilfe eines Elektromotors (6) verschoben zu werden, um selektiv eine Anpresskraft auf die Reibelemente (3) auszuüben, wobei das Verfahren derart ist, dass man für eine gegebene Bremsung eine auf die Reibelemente (3) der Bremse auszuübende Gesamtkraft heterogen auf die Aktoren (4) der Bremse verteilt, derart, dass mindestens zwei Aktoren (4) jeweilige unterschiedliche Kräfte ausüben, **dadurch gekennzeichnet, dass** die Verteilung auf die Aktoren (4) nach einer vordefinierten oder zufälligen Anzahl von Bremsungen geändert wird.

2. Bremsverfahren nach Anspruch 1, wobei für eine gegebene Bremsung jeder Aktor (4) einen vordefinierten Anteil zur Gesamtkraft beiträgt und wobei bei jeder Verteilungsänderung die vordefinierten Anteile unter den Aktoren derart getauscht werden, dass jeder Aktor nacheinander jeden der vordefinierten Anteile zur Gesamtkraft beiträgt.

3. Bremsverfahren nach Anspruch 1, wobei für eine gegebene Bremsung jeder Aktor (4) einen vordefinierten Anteil zur Gesamtkraft beiträgt und wobei bei jeder Verteilungsänderung die vordefinierten Anteile jedem Aktor zufallsbedingt zugeteilt werden.

## Claims

1. An electromechanical braking method for an aircraft having at least one electromechanical brake (2) fitted to at least one braked wheel (1) of the aircraft, the brake (2) having friction members (3) and a plurality of electromechanical actuators (4), each actuator (4) comprising a pusher (5) suitable for being moved by means of an electric motor (6) to selectively apply a pressing force on the friction members (3), the method being such that, for a given braking operation, a total braking force to be applied against the friction members (3) of the brake is distributed in non-uniform manner amongst the actuators (4) of the brake, such that at least two actuators (4) apply respective different forces, the method being **characterized in that** the distribution among the actuators (4) is modified after a predetermined or random number of braking operations.

2. A braking method according to claim 1, wherein, for a given braking operation, each actuator (4) delivers a predefined contribution to the total force, and wherein, on each modification of the distribution, the predefined contributions are permutated between the actuators so that each actuator delivers successively each of the predefined contributions to the total force.

3. A braking method according to claim 1, wherein, for a given braking operation, each actuator (4) delivers a predefined contribution to the total force, and wherein, on each modification of the distribution, the predefined contributions are allocated randomly to each of the actuators.
